# EUROPEAN PATENT APPLICATION

(11) **EP 1 743 681 A1**
(43) Date of publication of application: **17.01.2007**
(21) Application number: 05291525.3
(22) Date of filing: 13.07.2005
(51) Int. Cl.: A63F 13/00

(54) **Method for promoting an entertainment-based mobile application**

(71) Applicant: In Fusio (S.A.), 33000 Bordeaux (FR)
(72) Inventor: Corbett, Julian, Los Angeles, CA 90034 (US)
(74) Representative: Hirsch & Associés

(57) **Abstract**

The invention proposes a method for promoting an entertainment-based mobile application (for example a mobile game) in a community of users of mobile terminals (1,2,3) designed for a wireless communication network. At least a first and a second users are likely to communicate through the wireless communication network. The method according to the invention comprises detecting an action of the second user involving the entertainment-based mobile application. This action may for example takes place after invitation of the first user; it may further comprise a request to download said mobile application. This action further comprises providing a reference to the first user, for example providing the user/login or nickname of the first user to a server (11). The method then comprises updating a list pertaining to the first user with a reference to the second user - this may typically be managed by the server (11). Hence, the list reflects referral activity of the first user toward other users. An application logic of the mobile application is then modified according to the updated list. Hence, beyond the known reward incentive, the interest of the user in the entertainment application is renewed by modifications in the application logic. Said modifications may for example comprise providing a new virtual characters in the game, changing the scenario (provide new objectives, targets, weapons etc.), allowing virtual access to a next game level, etc.. Accordingly, the first user gets additional motivation to prompt the second user to take part in the mobile application, whereby the efficiency of the referral process is improved.

## Description

### FIELD OF THE INVENTION

This invention generally relates to the field of entertainment-based mobile applications, for example mobile games. The invention proposes a method for promoting an entertainment-based mobile application in a community of users of mobile terminals designed for a wireless communication network.

### BACKGROUND OF THE INVENTION

A number of referral methods are known. In such methods, a rewarding program is implemented for rewarding users who prompt other users to purchase products, sofwares or services.

In particular, programs are proposed that reward loyal subscribers with prizes or points for their participation in the mobile game.

Mobile game tournaments have even been proposed.

Related concepts are known, in which the more a gamer plays, the more he/she will have an opportunity to win.

Inviting people to join a mobile tournament has already be made the subject of a game. There: the gamers who invites the most friends win prizes.

Besides, some variations relevant to referral mechanisms and people networks have been proposed. For example, the document GB-A- 2 409 173 discloses a dating system and game, relating to a process for referral based dating whereby friends are prompted to identify suitable matches between their friends and use the service to easily send e-mail or text SMS messages on their behalf and to automate messages and exchanges between potential matches, whilst at the same time providing a mechanism for accumulating points and prizes.

The incentive methods discussed above help in promoting products, sofwares or services amongst potential customers.

Yet, as regards more specifically entertainment-based mobile applications, it is the belief of inventors that the efficiency of a method for promoting such an application could be improved, involving a new incentive process.

Furthermore, to the best of their knowledge, the prior art, whilst suggesting some features and numerous variations relevant to referral mechanisms and people networks in general, the prior art has not disclosed some of the highly advantageous features of the present invention discussed herein.

### SUMMARY OF THE INVENTION

The invention proposes a method for promoting an entertainment-based mobile application (for example a mobile game) in a community of users of mobile terminals designed for a wireless communication network. At least a first and a second users are likely to communicate through the wireless communication network. The method according to the invention comprises detecting an action of the second user involving the entertainment-based mobile application. This action may for example takes place after invitation of the first user; it may further comprise a request to download said mobile application. This action further comprises providing a reference to the first user, for example providing the user/login or nickname of the first user to a server. The method then comprises updating a list pertaining to the first user with a reference to the second user - this may typically be managed by the server. Hence, the list reflects referral activity of the first user toward other users. An application logic of the mobile application is then modified according to the updated list. Hence, beyond the known reward incentive, the interest of the user in the entertainment application is renewed by modifications in the application logic. Said modifications may for example comprise providing new virtual characters in the game, changing the scenario (provide new objectives, targets, weapons etc.), allowing virtual access to a next game level, etc.. Accordingly, the first user gets additional motivation to prompt the second user to take part in the mobile application, whereby the efficiency of the referral process is improved.

In other embodiments, the method of the invention may comprise one or more of the following features:
- the step of modifying the application logic is carried out according to a number of user entries of the updated list;
- the entertainment-based mobile application is a game;
- the step of modifying the application logic comprises modifying the ability of the first user to compete in the game;
- the step of modifying the application logic comprises affecting a gameplay of the first user and/or other users;
- the method further comprises, prior to the step of detecting: upon a request of the first user, offering to download the entertainment-based mobile application to the second user, wherein the step of detecting further comprises detecting a request of the second user to download the entertainment-based mobile application, the method further comprising triggering the download of the entertainment-based mobile application to a mobile terminal of the second user;
- the step of offering to download the entertainment-based mobile application uses a SMS addressed to the second user;
- the step of offering to download the entertainment-based mobile application comprises sending a WAP push message to the mobile terminal of the second user, the WAP push message comprising a link to a URL from which the download of the graphical application can be triggered
- the method further comprises, prior to the step of offering to download the entertainment-based mobile application, a step of providing the first user with a mobile application similar to the entertainment-based mobile application;
- wherein a mobile terminal of the first user is equipped with a virtual machine-based execution engine, designed for executing the mobile application; and
- the execution engine is compatible with MIDP standard requirements.

The invention is further directed to a platform adapted to implement the method of the invention, comprising a server connected to the network, the server being adapted for carrying out the steps of detecting the action of the second user, updating the list of the first user and modifying the application logic, and a computer program implementing the method of the invention.

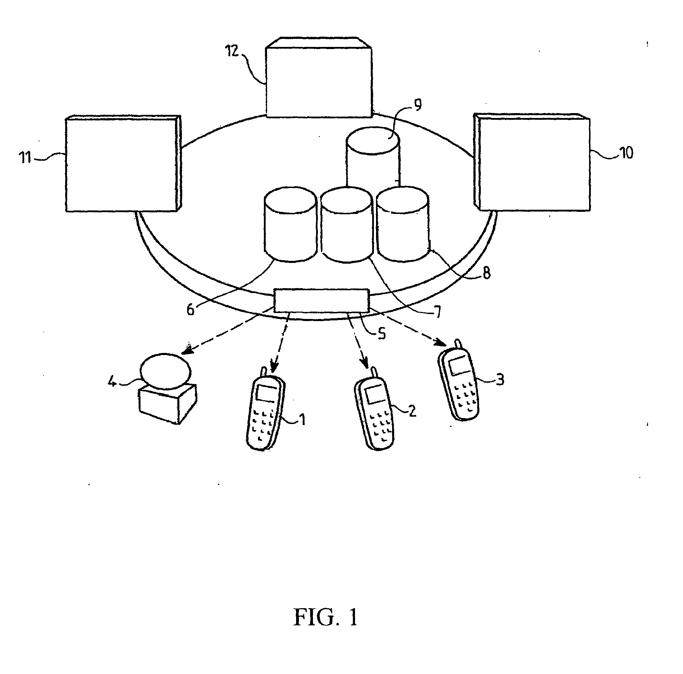

The foregoing has outlined rather broadly the features and advantages of the present invention in order that the detailed description of the invention that follows may be better understood. Additional features and advantages of the invention will be described hereinafter which form the subject of the claims of the invention. It should be appreciated by those skilled in the art that the conception and specific embodiments disclosed may be readily utilized as a basis for modifying or designing other structures for carrying out the same purposes of the present invention. It should also be realized by those skilled in the art that such equivalent constructions do not depart from the spirit and scope of the invention as set forth in the appended claims. The novel features which are believed to be characteristic of the invention, both as to its organization and method of operation, together with further objects and advantages will be better understood from the following description when considered in connection with the accompanying figure. It is to be expressly understood, however, that the figure is provided for the purpose of illustration and description only and is not intended as a definition of the limits of the present invention.

### BRIEF DESCRIPTION OF THE DRAWING FIGURE

For a more complete understanding of the present invention, reference is now made to the following descriptions taken in conjunction with the accompanying drawing, in which the unique figure is a diagram showing schematically a system implementing the method of the invention, in an embodiment.

### DESCRIPTION OF THE PREFERRED EMBODIMENT

In reference to the figure, the invention proposes a platform for providing services related to graphic applications (such as games) to be executed on a mobile terminal 1, 2, 3. Said terminals are designed for a wireless communication network (for example the GSM or GPRS network), which network notably comprises the platform, and may in particular comprise a WAP-compatible terminal 1, a terminal 2 using a virtual machine-based execution engine (for example working as a Java virtual machine) and an SMS-compatible terminal 3. Details will be given later about such an execution engine. The platform may further be accessed from a classical web-browser, running on a computer 4 connected to the network.

The platform comprises a network gateway 5 and databases 6, 7, 8, 9. Software solutions 10 are provided which allow for statistical processing of activities on the platform, including for example billing. The platform further comprises one or more server 11, for example an application server, wherein applications are stored, and a server hosting a web site, e.g. intended for user information and downloads. The application server and the user web site server may preferably be considered as a single server, say the application server, as will be assumed hereafter, for the sake of simplicity. The platform also comprise a community manager 12, for example dedicated to advertisement, hosting and/or management of consumer contest or promotional games.

Hence, a community of users (mobile gamers, new users, game developer) is likely to communicate through the network and access services provided from the platform.

Such a platform of services turns out convenient for managing an entertainment-based mobile application and, in particular, a wireless-to-Web entertainment application, with which users interact from either mobile terminal or web browser.

We shall suppose, in the following and for the purpose of illustration and description only, that the entertainment application (hereafter "the game") relates to virtual characters (for example virtual creatures, superheroes, etc.) to be managed by users. The wireless-to-Web connectivity may for instance allow concerned owners to manage their virtual characters, thanks to the above discussed platform. Management of characters may for example comprise maintaining characters well-being, manage their accounts, buy and sell virtual goods intended for the virtual evolution of the characters in the game. As said, a dedicated Web site may further be developed and host by a server, so as to host adapted content for mobile gamers, for example make a library of characters, virtual playground or various items available to mobile users. Other features of the game will be discussed throughout.

First, a user may for example be provided with the game. This can for instance be achieved by downloading the associated application on the mobile terminal.

If satisfied with the game, the user is likely to invite someone he/she knows to participate in the game.

Accordingly, users are preferably encouraged from inside the game to invite friends to play the mobile game. The invitation process is hence enabled from inside the game itself, so as to directly benefit from the powerful sales tool of word of mouth. Consumers are indeed most likely to purchase a product when it is recommended to them by someone they know.

To enable such an invitation, SMS and/or "WAP push" technology may preferably be invoked by the game. In addition, the ability to send SMS messages from inside the game will preferably be limited to each mobile network's ability to send WAP push messages. In the last case, a mobile web-link is embedded into a message, which a second user may click on so as to automatically be taken to the download page. Otherwise put, the WAP push message sent to the second user comprises a link to a URL from which download of the graphical application can be triggered. More generally, the WAP Push directs the end user to a WAP address where particular content may be stored ready for viewing or downloading to the second user terminal. The address could be e.g. a simple page or multimedia content (e.g. polyphonic ring tone) or a Java application.

Yet, if costs are involved (or beyond a threshold cost value) in the sending of SMS messages, the number of SMS messages that can be sent may be limited by the game itself. Further, if the network carrier does not allow WAP push messages, the first user will for example be encouraged to compose and send his/her own SMS's to a second user. The first user would in this case be instructed on how it is needed to mention his/her username or login name inside the SMS, so as to be conveniently registered upon subsequent action of the second user.

In response to the invitation of the first user, the second user requests the server, e.g. clicks on a URL provided in a message sent by the first user, from which the game can be downloaded. In this example, when it is detected a request of the second user to download the game (that is, upon clicking the URL), download of a file corresponding to the game is triggered on the terminal of the second user.

Notice that if the network and terminal supports SMS sending, identification of the users may automatically be done by the server. Else, when accessing the server, the second user can be requested to enter a username or login of the first user, in order to properly register the referring user (here the first user). Testing of the network is typically carried out before deploying the game.

Accordingly, the game application may possibly comprise options adapted to the network type, and provide a convenient menu to the user, depending on the terminal capacity.

The server then updates a list pertaining to the first user (or dedicated fields in a database) with a reference to the second user, whereby the referral mechanism can successfully be taken into account. The updated list thus reflects referral activity of the first user.

Preferably, the game application retrieves the updated list from the server (possibly updated a local copy of the list) when the game is started, so as to allow executing game to take changes into account.

This allows for rewarding the first user for every new user he/she signs up, for example with points or prizes. Preferably, the size of the list (e.g. the number of other user entries stored on the list) might be used.

Yet, other statistical parameters of the list may be analyzed from the server, such as the growth rate or any other parameter measuring the referral activity of the first user, so as to refine the rewarding process.

For example, in operation, a first user can send invitations to their friends from the main menu of the game application, inviting them to download the game and join their "tribe". If any of them takes up their offer and enters the sender's username when they register (if not automatically detected), the list of the first user is accordingly updated and both the new a first user may earn new points or items. With just one friend signed up to their group, gamers will immediately see and feel the benefits, and will be encouraged to enlist more with promises of further rewards. From their "Friends" page, they can see how many they have signed up, but will also be told what new rewards they can earn if they enlist more.

Preferably, new gamers can only be signed up once, so as to enhance competition between gamers.

Further, the updated list may affect the propensity of the first user to act in the game. As an example, an influence of the first user may be changed according to features of the list. Influence can, in some games, be contemplated as a factor likely to give certain people the edge in a deal.

If necessary, the computation of "influence points" may involve both statistics of the user list and a random number, so as to introduce some uncertainties in the outcome of the game (the evolution of the game is therefore not fully predictable) and thereby enhance gamer's incentive.

The user influence, as managed by the server, is likely to unlock new features of the game (whereby the game logic is changed) and possibly increase chance of winning in every part of the game. As to exemplify a possible modification of the game logic: when a threshold level of influence points is reached, the user may be provided with a new virtual character, having new features and implying thereby a change in the gameplay.

Therefore, beyond the known reward incentive, the interest of the user in the entertainment application is renewed by modifications in the game logic. Accordingly, gamers gets additional motivation to prompt other gamers to take part in the mobile application. As a result, the efficiency of the referral process is improved.

Notice that the game logic may either be changed either upstream, in the server (for example, new characters are made available to the gamer) or downstream (e.g. a parameter or file is downloaded on the application which unlocks new features).

Preferably, the step of modifying the application logic further comprises modifying the ability of the first user to compete in the game.

Preferably also, to prevent spamming, the game application may be designed so as to allow only one other recipient, when sending an invitation. In addition, gamers might only be able to receive a given maximum of referrals (for example twenty) until a key characteristic (for example their influence) reaches maximum. In this case, a corresponding message could be displayed on the terminal graphical interface when trying to access the referring menu.

In an alternate embodiment, the number of connected members that a first gamer gets by the referral process enables not only to affect the gameplay of the first gamer but also that of other gamers. For example, a vote might be organized from the server, requiring participation of several gamers. Then, the bigger the list (the "tribe") of a gamer, the more his/her vote will impact the outcome of the game of other gamers.

More generally and as exemplified above, the game scenario may involve actions of several gamers.

In alternate embodiments also, the size of a user's tribe may be an integral part of the game, either as a prime objective or as a key characteristic of the game. In this case, the key characteristic may relate to influence or power level of a character within the game, thus enabling a gamer to achieve more objectives of the game.

Further, as mentioned above, some of the user terminals 2 may advantageously be equipped with an execution engine working as a Java virtual machine, such as ExEn®. Notwithstanding, ExEn® is not a prerequisite for implementing the method according to the invention.

The execution engine may advantageously be dedicated to mobile gaming and optimized for advanced game features, preferably compatible with MIDP™ requirements. Working as a virtual machine, such an engine may turn mobile terminals into portable consoles. It would further prevents many of security issues (viruses, crashes...) that occur when games (or applications) are run locally.

For example, part of ExEn®'s development is dedicated to security: the software provides built-in identification, useful for billing, statistics, data mining, customization, etc.. The ExEn® technology can further provide new game application programming interfaces, which will be necessary for advanced games under the MIDP™ 2.0 standard.

ExEn® further acts as an interface between the operating system of the terminal and the applications downloaded as game application programming interfaces.

In this respect, when downloading a digital file corresponding to the game or said entertainment application: the file is downloaded on a given terminal 1, 2 or 3 from the application server 11 and network gateway 5.

Preferably yet, the files to be downloaded may be selected by the server according to the technology used by the mobile terminals. In particular, for those mobile terminal using an advanced execution engine, such as described above, the downloaded digital file may comprise a first family of digital objects corresponding to a graphic object library, a second family of digital objects corresponding to a environment descriptors and a third family of digital objects corresponding to computer programs (or scripts) controlling interactions between the first and second digital objects, as well as interactions with the local (input/output means of the terminal 1, 2, 3 concerned) or external environment (the application server 11). These objects enable conversion of specific functions of a game or an application, in local functions provided in the execution engine. Advantages provided by advanced execution engines can thereby be obtained.

For example, digital files of graphical games thereby reduces to files with sizes of 10 to 100 kB.

Preferably also, modifying the game logic may take into account the technology used by the considered terminal. For example, when a modification of the game logic occurs and leads to provide a gamer with a new feature (such as a new character), said new features might be associated with digital files selected by the server according to the technology used by the target terminal. Hence, specific advanced game features may be downloaded according to the scheme discussed above, on those terminals equipped with ExEn® or the like.

The invention is not limited to the preferred embodiments described above, in reference to the drawings. In particular: handheld devices could be used instead of mobile terminals.

## Claims

1. A method for promoting an entertainment-based mobile application in a community of users of mobile terminals designed for a wireless communication network, at least first and second users being likely to communicate through the wireless communication network, the method comprising:
- detecting an action of the second user involving the entertainment-based mobile application, wherein said action comprises providing a reference to the first user;
- updating a list of the first user with a reference to the second user; and
- modifying an application logic of the entertainment-based mobile application according to the updated list.

2. The method of claim 1, wherein the step of modifying the application logic is carried out according to a number of user entries of the updated list.

3. The method of claim 2, wherein the entertainment-based mobile application is a game.

4. The method of claim 3, wherein the step of modifying the application logic comprises modifying the ability of the first user to compete in the game.

5. The method of claim 3, wherein the step of modifying the application logic comprises affecting a gameplay of the first user and/or other users.

6. The method of claim 1, further comprising, prior to the step of detecting:
- upon a request of the first user, offering to download the entertainment-based mobile application to the second user;
wherein the step of detecting further comprises:
- detecting a request of the second user to download the entertainment-based mobile application,
the method further comprising:
- triggering the download of the entertainment-based mobile application to a mobile terminal of the second user.

7. The method of claim 6, wherein the step of offering to download the entertainment-based mobile application uses a SMS addressed to the second user.

8. The method of claim 6, wherein the step of offering to download the entertainment-based mobile application comprises sending a WAP push message to the mobile terminal of the second user, the WAP push message comprising a link to a URL from which the download of the graphical application can be triggered.

9. The method of claim 6, further comprising, prior to the step of offering to download the entertainment-based mobile application, a step of:
- providing the first user with a mobile application similar to the entertainment-based mobile application.

10. The method of claim 11, wherein a mobile terminal of the first user is equipped with a virtual machine-based execution engine, designed for executing the mobile application.

11. The method of claim 10, wherein the execution engine is compatible with MIDP standard requirements.

12. A platform adapted to implement the method of claim 1, comprising a server connected to the network, the server being adapted for carrying out the steps of detecting the action of the second user, updating the list of the first user and modifying the application logic.

13. A computer program implementing the method of claim 1.
